# EUROPÄISCHE PATENTSCHRIFT

(11) **EP 1 268 618 B1**
(45) Veröffentlichungstag und Bekanntmachung des Hinweises auf die Patenterteilung: **08.11.2006**
(21) Anmeldenummer: 01925406.9
(22) Anmeldetag: 09.03.2001
(51) Int. Cl.: C08J 5/00, C08L 29/04, C08F 8/00

(54) **FORMKÖRPER UMFASSEND EINE FORMKÖRPERHÜLLE UND EINEN FORMKÖRPERINHALT, INSBESONDERE KAPSELN MIT EINTEILIGER KAPSELHÜLLE, SOWIE VERFAHREN ZUM HERSTELLEN VON FORMKÖRPERN UND SCHUTZSCHICHTEN**
SHAPED BODY COMPRISING A SHAPED BODY SHELL AND A SHAPED BODY CONTENT, ESPECIALLY CAPSULES WITH A ONE-PIECE CAPSULE SHELL, AND METHOD FOR PRODUCING SHAPED BODIES AND PROTECTIVE COATS
CORPS FORME COMPRENANT UNE ENVELOPPE ET UN CONTENU, NOTAMMENT CAPSULES A ENVELOPPE MONOBLOC, ET PROCEDE DE PRODUCTION DE CORPS FORMES ET DE COUCHES DE PROTECTION

(30) Priorität: 10.03.2000 CH 473002000
(43) Veröffentlichungstag der Anmeldung: 02.01.2003
(73) Patentinhaber: Swiss Caps Rechte und Lizenzen AG, 9533 Kirchberg (CH)
(72) Erfinder: MAIER, Hans-Jürgen, CH-8636 Wald-Oberholz (CH)
(74) Vertreter: Wenger, René
(86) Internationale Anmeldenummer: PCT/EP2001/002652
(87) Internationale Veröffentlichungsnummer: WO 2001/066082

(56) Entgegenhaltungen:
- EP-A- 0 404 723
- EP-A- 0 902 038
- WO-A-94/04656
- WO-A-96/35748
- WO-A-97/35537
- WO-A-99/46329
- GB-A- 1 006 284
- GB-A- 1 015 849
- GB-A- 2 091 276
- US-A- 5 852 114
- US-A- 5 914 368
- DATABASE WPI Section Ch, Week 8642 Derwent Publications Ltd., London, GB; Class A14, AN 1986-275170 XP002176130 & JP 61 200105 A (ZH KAKUTOKAI), 4. September 1986 (1986-09-04)

## Beschreibung

Die Erfindung betrifft einen Formkörper umfassend eine Formkörperhülle und einen Formkörperinhalt, insbesondere Kapseln mit einteiliger Kapselhülle, sowie Verfahren zum Herstellen von Formkörpern und Schutzschichten gemäss der Oberbegriffe der unabhängigen Patentansprüche.

In den letzten Jahren werden vermehrt Anstrengungen unternommen, Verpackungsmaterialien wenigstens teilweise aus nachwachsenden und biologisch abbaubaren Rohstoffen herzustellen. In einer Vielzahl von Publikationen werden Stärke, Stärkederivate und Stärkemischungen als filmbildendes Basismaterial für die Herstellung von Verpackungen, Formkörpern und Filmen offenbart, z.B. EP 118 240, EP 304 401, EP 327 505, EP 397 819, WO 90/14938, EP 479 964.

Im Sinne einer "Einmal-Verpackung" werden vermehrt auch Kapseln mit entsprechenden Inhalten für technische Zwecke angeboten, wie zum Beispiel Kapseln mit Badezusätzen, Kapseln mit Tensiden, Kapseln mit Farbstoffen für die Markierung von Gegenständen, Kapseln mit Aromazusätzen oder Kosmetika, etc.

Die Kapselhülle umschliesst und "verpackt" dabei den Inhaltsstoff in richtiger, auf den Anwendungszweck abgestimmter Menge und Zusammensetzung. Damit werden für den Endverbraucher arbeitsaufwendige und fehleranfällige Dosierungen des Inhaltsstoffes vermieden. Die Kapselhülle muss lager- und transportfähig sein. Nach Freisetzung des Inhaltsstoffes darf das Kapselhüllmaterial keine störenden Nebeneffekte verursachen, insbesondere muss es bei und nach Anwendung rückstandslos entfernbar sein. Diesen Anforderungen werden Kapselhüllen aus dem bisher gängigen Material, der Gelatine, nicht gerecht. Kapselhüllen aus Gelatine setzen bei Temperaturen unter 40° C den Inhaltsstoff auf Grund ihrer mangelnden Löslichkeit bei diesen Temperaturen nicht frei. Auch bei höheren Temperaturen löst sich Gelatine oft nicht vollständig auf. So können beispielsweise Gelatinekapseln, die mit Waschmittelkonzentrat gefüllt sind selbst noch in Waschgängen bei 60° C zu Resten von ungelöster Gelatine auf dem Gewebematerial führen. Diese Reste verursachen beim Bügeln unannehmbare Schäden. Auch Gelatinekapseln, die mit Badezusätzen gefüllt sind, werden vom Benutzer nicht akzeptiert, wenn sich Reste ungelöster Gelatine im Badewasser finden. Gänzlich ausgeschlossen sind schliesslich Anwendungen, bei denen ungelöste Gelatine Filter oder Leitungen verstopfen können und hierdurch ein bestimmungsgemässer Gebrauch von Anlagen und Maschinen gefährdet wird.

Aufgabe der vorliegenden Erfindung ist die Vermeidung der Nachteile des Standes der Technik.

In der GB-2 091 276 sind Formkörper offenbart, deren Hülle vorzugsweise aus einem Gemisch aus Polyvinylalkohol und Polyvinylpyrrolidon besteht. Es ist keine Acetalisierung des Polyvinyalalkohols beschrieben.

Insbesondere ist es Aufgabe der vorliegenden Erfindung, Materialien bereitzustellen, die sich für die Herstellung von wasserlöslichen Formkörpern und Folien als Primär- und Sekundärpackmittel eignen.

Es ist eine weitere Aufgabe der vorliegenden Erfindung Materialien bereitzustellen, die sich für die Verarbeitung zu Formkörperhüllen, insbesondere Kapselhüllen eignen, die biologisch abbaubar sind, deren Wasserlöslichkeit in Abhängigkeit von der Temperatur einstellbar ist und insbesondere Kaltwasserlöslichkeit aufweisen.

Diese Aufgaben werden gelöst durch die Merkmale der unabhängigen Ansprüche.

Insbesondere werden sie gelöst durch einen Formkörper umfassend eine Formkörperhülle und einen Formkörperinhalt gemäss Anspruch 1.

Im Zuge der vorliegenden Erfindung sollen unter dem Begriff Polyvinylalkohole diejenigen Polyvinylalkohole verstanden werden, die abgesehen von den aus der Polyvinylalkoholstruktur herrührenden Hydroxylgruppen andere funktionelle Gruppen (beispielsweise Acetylgruppen) nur bis maximal 0.5 Mol% aufweisen. Übersteigt der Gehalt an funktionellen Gruppen, die nicht Hydroxylgruppen der Polyvinylalkoholstruktur sind, 0.5 Mol%, so werden die Polymere im Kontext der vorliegenden Erfindung als Polyvinylalkoholderivate bezeichnet. Unter den Begriff Polyvinylalkoholderivate fallen demgemäss auch teilverseifte Polyvinylalkohole mit einem 0.5 Mol% übersteigenden Restgehalt an Acetylgruppen. Der Begriff soll jedoch nur solche Polymere bezeichnen, bei denen der Anteil des Polyvinylalkohols grösser oder gleich 50 Gew.% bezogen auf das Gesamtgewicht des Polymeres ist.

In einer bevorzugten Ausführungsform umfassen die Formkörperhüllen Polyvinylalkoholderivate, welche einen Restgehalt an Acetylgruppen von 13 bis 0,5 Mol%, bevorzugt von 12 bis 1 Mol% aufweisen.

Erfindungsgemäß enthalten die Polyvinylalkoholderivate mindestens eine Acetalgruppe. Die Acetalgruppen können neben den Hydroxylgruppen der Polyvinylalkoholstruktur die einzigen funktionellen Gruppen im Polymer sein (bei Acetalisierung von Polyvinylalkohol gemäss Definition). Sie können aber auch in Kombination mit weiteren funktionellen Gruppen, wie z.B. Acetylgruppen, auftreten. Letzteres tritt beispielsweise auf, wenn an den oben beschriebenen teilverseiften Polyvinylalkoholen Acetalisierungsreaktionen vorgenommen werden.

Die vorliegende Erfindung betrifft einen Formkörper umfassend eine Formkörperhülle und einen Formkörperinhalt, wobei die Formkörperhülle wenigstens ein filmbildendes Polymer enthält, dass mindestens eine Acetalgruppe pro Molekül enthält. Erfindungsgemäß sind hier als Polymere die bereits erwähnten Polyvinylalkoholderivate ausgewählt.

In einer besonders vorteilhaften Ausführungsform enthält die Formkörperhülle die in EP 771 329 beschriebenen Polyvinylalkoholderivate. Der Gegenstand und Offenbarungsinhalt der EP 771 329 ist deshalb in seiner Gesamtheit Teil der vorliegenden Er-329 ist deshalb in seiner Gesamtheit Teil der vorliegenden Erfindung. Die in EP 771 329 offenbarten Polyvinylacetale sind durch Acetalisierungsreaktion von Polyvinylalkoholderivaten (gemäss Nomenklatur der vorliegenden Anmeldung) mit mindestens einem mindestens eine Carbonylgruppe oder präsumptive Carbonylgruppe enthaltenden Naturstoff und/oder Naturstoffderivaten herstellbar. Die zur Synthese der Polyvinylacetale eingesetzten Polyvinylalkoholderivate haben Verseifungsgrade zwischen 80 und 99,5 Mol%, bevorzugt zwischen 90 und 99 Mol%. Die Acetalisierungsreaktion läuft bevorzugt unter Säurekatalyse. Unter der Bezeichnung präsumptive Carbonylgruppen werden in EP 771 329 solche Naturstoffe verstanden, welche unter Acetalisierungsbedingungen, vorzugsweise unter säurekatalysierten Acetalisierungsbedingungen, funktionelle Gruppen ausbilden, die die für Aldehyd- und Ketongruppen typischen Reaktionen zeigen. Eine typische Reaktion ist beispielsweise die Oximbildung mit Hydroxylaminen. Carbonylgruppen enthaltende Naturstoffe und Naturstoffderivate sind dagegen solche Naturstoffe, die reaktionsfähige Aldehyd- bzw. Ketogruppen aufweisen. Als Naturstoffderivate kommen unter anderem auch solche Substanzen in Frage, welche aus Naturstoffen durch einen physikalisch-mechanischen Abbau oder durch einen Abbau auf enzymatischem und/oder chemischem weg, wie säure- oder basenkatalysierte Hydrolyse und/oder enzymatischem und/oder oxidativem Abbau entstehen, und dabei die vorgenannten Merkmale der Carbonylgruppen oder präsumptiven Carbonylgruppen beibehalten bzw. ausbilden.

Hinsichtlich der biologischen Abbaubarkeit der Formkörperhüllen sind insbesondere diejenigen Polyvinylacetale der EP 771 329 vorteilhaft, bei denen der Carbonylgruppen bzw. präsumptive Carbonylgruppen enthaltende Naturstoff ausgewählt ist aus der Gruppe bestehend aus Monosacchariden, Disacchariden, sowie nativen und depolymersierten Polysacchariden. Bei Polysacchariden bzw. bei abgebauten (depolymerisierten) Polysacchariden, den Oligosacchariden, reagieren beispielsweise entweder bereits vorhandene entständige oder entstehende endständige Halbacetalgruppen der Poly- oder Oligomere. Besonders vorteilhaft hat sich als depolymerisiertes Polysaccharid depolymerisierte Stärke, insbesondere Kartoffel- oder Reisstärke erwiesen. Insbesondere werden die wasserlöslichen Fraktionen zur Acetalisierungsreaktion eingesetzt.

Die mittleren Polymerisationsgrade des Polyvinylalkoholderivates sind vor der Acetalisierung vorteilhaft im Bereich von 200 bis 2'700, bevorzugt im Bereich von 300 bis 1'500 und noch bevorzugter im Bereich von 400 bis 1'000.

Die Wasserlöslichkeit der Formkörperhülle kann durch Variation des Acetalisierungs- und Polymerisierungsgrades, d.h. der Kettenlänge, variiert bzw. eingestellt werden. Über den mittleren Polymerisationsgrad der Polyvinylacetale kann die Wasserlöslichkeit der erfindungsgemässen Formkörper reguliert werden. Es wird an dieser Stelle auf die Ausführungen in EP 771 329 verwiesen.

Die Formkörperhülle kann weiterhin einen oder mehrere der folgenden für ihre Weichmacherwirkung bekannten Substanzen enthalten: Wasser, Glycerin, Propylenglycol, Harnstoff, Dimethylsulfoxid, Dimethylformamid, N-Methyl-2-Pyrrolidon, Polyoxyketone, Sorbitol, Sorbitane (cyklische lineare Ether des Sorbitols), oligomere hydrierte Stärkeabbauprodukte (Polysorbitole), Polyethylenglycol, Polyethylenglycolfettsäureester, Glycerinfettsäureester, Polyglycerinfettsäureester, ethoxylierte Sorbitanfettsäureester sowie niedermolekulare Polyvinylalkohole und -derivate. Durch Zusatz einer oder mehrerer dieser Substanzen kann die Formkörperhülle bzw. der Film aus dem sie gefertigt werden auf ein ganz spezifisches Anforderungsprofil eingestellt werden, werden, z.B. Verarbeitung bei einer bestimmten Temperatur, Bruchfestigkeit, Young'sches Elastizitätsmodul.

Die Weichmacher sind in einer Menge im Bereich von 0.1 Gew.% bis 70 Gew.% bezogen auf das Gesamtgewicht der Formkörperhülle enthalten.

Überraschenderweise hat sich gezeigt, dass die mit Stärke acetalisierten Polyvinylacetale aus EP 771 329 schon mit kleinen Anteilen Weichmacher über eine hohe Elastizität verfügen. Wasser wirkt ebenfalls als Weichmacher. Hohe Wasseranteile müssen jedoch nach Ausformung der Formkörperhülle in der Regel wieder in einem separaten Arbeitsschritt entfernt werden, um die Stabilität des Formkörpers zu garantieren. Besagte Polyvinylacetale erlauben kleine Anteile an Wasser, womit auf den zusätzlichen Schritt der Trocknung verzichtet werden kann. Insbesondere hat sich eine "Dreierkombination" aus Wasser, Glycerin und Sorbitol als vorteilhaft erwiesen. Der Zusatz von Glycerinmonostearat hat zusätzlich positive Effekte.

Erfindungsgemäss enthält die Formkörperhülle des Formkörpers wenigstens noch ein Polyglycerin mit einem Polymerisationsgrad von grösser oder gleich vier.

Es hat sich gezeigt, dass das Polyglycerin als Weichmacher in Verbindung mit Polyvinylalkoholen und -derivaten, insbesondere mit denen aus EP 771 329, in Filmen bzw. daraus hergestellten Formkörpern für überraschend hohe maximale Bruchdehnungswerte sorgt. Überraschend ist dabei weniger der Absolutwert der Bruchdehnung, welcher neben der Kombination von Materialien auch von der relativen Menge der Komponenten abhängt, sondern vielmehr die relative Erhöhung der maximalen Bruchdehnung gegenüber Zusammensetzungen, die die niedermolekularen Homologen des Polyglycerins (d.h. Mono-, Di- und Triglycerin) in gleichen Gewichtsprozenten enthalten. Bei Verwendung von Polyglycerin kann beispielsweise im Vergleich zur gleichen Menge Glycerin eine Erhöhung der maximalen Bruchdehnung um mehr als 60% erreicht werden (nach DIN 51562-1 - 4). Ohne sich auf diese Erklärung festzulegen, könnte dies ursächlich auf ein besonders vorteilhaftes Verhältnis der Anzahl Hydroxylgruppen zur mittleren Kettenlänge bzw. mittlerem Molekulargewicht (Gewichtsmittel) beruhen. Die höhere Anzahl Hydroxylgruppen sorgt für im vergleich zum Monomeren Glycerin vermehrte Ausbildung von Wasserstoffbrückenbindungen vom Weichmacher zum matrixbildenden Polymer (geringere Migrationstendenz). Gleichzeitig kann sich das Polyglycerin aber gerade im Sinne eines Weichmachers noch zwischen die matrixbildenden Polymerketten einlagern und die Beweglichkeit derselben zueinander gewährleisten. Die Definition des Begriffes Weichmacher erfolgt entsprechend DIN 55945 und Römpp Chemie-Lexikon, Hsgb. J. Falbe, D. Regitz, Georg Thieme, Verlag Stuttgart, 9. Auflage, S. 5017 - 5020. Die Weichmacherwirkung lässt sich durch Schmelzpunkts- und Glastemperatur-Depression (DSC) messen.

Polyglycerine werden vorzugsweise in Reinheiten grösser oder gleich 70 Gew.%, noch bevorzugter 75 Gew.% eingesetzt. Das bedeutet, dass das namengebende Polyglycerin (z.B. Tetra-, Hexa-, Decaglycerin) in Gewichtsanteilen von grösser oder gleich 70 Gew.% bezogen auf das Gesamtgewicht des Polyglycerins vorhanden ist. Die verbleibenden maximal 30 Gew.% verteilen sich auf die nieder- oder höhermolekularen Homologen. Die eingesetzten Polyglycerine sind damit Substanzen mit klar definierten chemischphysikalischen Eigenschaften. Dies gewährleistet Reproduzierbarkeit im Hinblick auf spezifische Parameter der Zusammensetzung. Polyglycerine sind physiologisch inert, geruchs- und geschmacksneutral, wasserlöslich und haben exzellente Weichmachereigenschaften für die oben erwähnten Polymere ohne aus der Formkörperhülle zu migrieren.

In einer vorteilhaften Ausführungsform ist der Polymerisationsgrad des Polyglycerins in der erfindungsgemässen Zusammensetzung im Bereich von 5 bis 20, und noch bevorzugter von 6 bis 12.

Besonders bevorzugt ist das Polyglycerin mit dem Polymerisationsgrad 10, das Decaglycerin.

Das Polyglycerin liegt in der Formkörperhülle in einer Menge vor, welche den Bereich von 0,1 Gew.% bis 70 Gew.% bezogen auf das Gesamtgewicht der Formkörperhülle umfasst. Bevorzugte Gewichtsbereiche liegen zwischen 10 Gew.% und 40 Gew.%. Es können Polyglycerine nur eines Polymerisationsgrades eingesetzt werden oder auch Mischungen von Polyglycerinen mit unterschiedlichen Polymerisationsgraden. Das/die Polyglycerin(e) kann/können linear, verzweigt oder cyklisch aufgebaut sein.

Die Bezeichnung Formkörper umfasst als Abgrenzung zu Schutzschichten, die ebenfalls mit der die Formkörperhülle bildenden Zusammensetzung herstellbar sind, ein in sich zusammenhängendes Gebilde beliebiger Form und Dicke, das ohne einen daran fest anliegenden und das Material stützenden Untergrund herstellbar und selbsttragend einsatzfähig ist.

In der Formkörperhülle des erfindungsgemässen Formkörpers kumulieren damit mehrere der auch für Verpackungsmaterialien relevanten und notwendigen Eigenschaften in vorteilhafter Weise. Die Formkörperhülle bzw. das Material der Formkörperhülle kann so eingestellt werden, dass sie auch bei Wassertemperaturen unter 40°C, bevorzugt unter 35°C wasserlöslich bzw. wasserdispergierbar ist, sie ist nahezu 100% biologisch abbaubar, geruchs- und geschmacksneutral und kann auf hohe Bruchdehnungswerte bei Verarbeitungstemperatur eingestellt werden. Diese Eigenschaften machen sie für den Einsatz als Primär- und Sekundärpackmittel überaus geeignet. Unter Packmittel wird eine geformte Umhüllung verstanden, die in der Regel vor Applikation oder Gebrauch von dem verpackten Inhalt getrennt wird z.B. Flaschen, Folien, Beutel etc. Primäre Packmittel sind direkt in Kontakt mit dem Verpackungsgut, sekundäre Packmittel jedoch nur mit der primären Verpackung. In einer besonderen Ausführungsform bilden Primärpackmittel einen Teil des Produktes. Umhüllung und Inhalt werden gemeinsam der Applikation zugeführt. Ein "Auspacken" des eigentlichen Inhalts muss nicht mehr stattfinden. Beispiele aus dem Lebensmittelbereich sind Suppenpulver, welche in einen Schlauchbeutel gefüllt, mit diesem in Wasser gegeben werden. Beispiele aus dem technischen Bereich sind Düngemittel bzw. Pestizide, die in der Darreichungsform mit der Umhüllung ausgebracht werden. Die Sicherheit für den Anwender ist damit beträchtlich erhöht. Eine besondere Ausführungsform eines solchen primären Packmittels, ist die Formkörperhülle in Ausbildung einer Kapsel umfassend Kapselinhalt und Kapselhülle.

In einer weiteren Ausführungsform ist der Formkörperinhalt eines ersten erfindungsgemässen Formkörpers ein zweiter erfindungsgemässer Formkörper. Bevorzugt ist der zweite Formkörper als Kapsel ausgebildet. Die Hülle des ersten Formkörpers hat somit die Funktion eines Sekundärpackmittels für den zweiten Formkörper, dessen Hülle wiederum die Funktion eines Primärpackmittels hat. Das Material des Sekundär- und Primärpackmittels ist ausgewählt aus der Gruppe der gleichen Materialien, Bei den Materialien handelt es sich um die bereits beschriebenen Zusammensetzungen und vorzugsweise um die in EP 771 329 beschriebenen Polyvinylacetale nebst vorteilhaften, ebenfalls bereits beschriebenen, Zusatzstoffen. In einer bevorzugten Ausführungsform ist der verpackte, d.h. der in einem Sekundärpackmittel eingeschlossene erste Formkörper, eine Kapsel mit einteiliger Kapselhülle und einer flüssigen Waschmittelzusammensetzung als Kapselinhalt. Der erste Formkörper kann mitsamt Sekundärpackmittel der Anwendung zugeführt werden. Neben dem Aspekt der kindersicheren Verpackung des ersten Formkörpers entfällt zeitaufwendiges Auspacken des Formkörpers. Auch lassen sich beispielsweise zusätzliche nicht verkapselbare Substanzen in das Sekundärpackmittel einlagern. Da natürlich auch das Sekundärpackmittel zu nahezu 100% biologisch abbaubar ist, entfallen weitere Kostenpflichtige Entsorgungsschritte für das Sekundärpackmittel.

Die Formkörper können aufgrund der hohen Bruchdehnungswerte des die Formkörperhülle bildenden Materials, insbesondere wenn als Film ausgebildet, in allen denkbaren Gestaltungen hergestellt werden. Die Thermoplastizität erlaubt darüberhinaus aber auch die Herstellung von Verpackungsformen durch andere Herstellungs technologien (z.B. Giessen, Tauchen, Spritzguss (injecion moulding, co-injection moulding), Extrusion zu Flach-Folien, Balfolien etc).

Wie bereits erwähnt, ist in einer vorteilhaften Ausführungsform der erfindungsgemässe Formkörper eine Kapsel mit einer ein- oder zweiteiligen Kapselhülle. Die Kapselhülle lässt sich bevorzugt mittels Rotary-Die-Verfahren herstellen.

Die Verkapselung flüssiger und pastöser Inhaltsstoffe setzt einteilige Kapselhüllen voraus. Für flüssige, im weitesten Sinne pumpbare Kapselinhaltsstoffe haben sich automatisierbare kontinuierliche Herstellungsverfahren durchgesetzt. Die Herstellung der Kapselhülle und das Füllen derselben geschieht dabei in einem einzigen Arbeitsschritt. In diesem kontinuierlichen, "Ein-Schrittverfahren" werden Formteile gefertig, aus denen die Kapselhülle während und nach dem Füllen durch Verschweissen der Aussenkanten der Formteile zusammengefügt wird. Die Formteilfertigung geschieht entweder mittels auseinander- und zusammengehender Formen, wie zum Beispiel im Norton-, Banner- und Schering-Prozess oder mittels rotierender Formwalzen, wie es zum Beispiel im Rotary-Die-Prozess und im Accogel-Verfahren verwirklicht ist ("Die Kapsel", Hrsg. Fahrig/Hofer, Stuttgart, 1983). Das Füllen erfolgt mit Hilfe von Dosierpumpen, die eine definierte Menge des Inhaltsstoffes während des Ausstanzens und Verschweissens der Formteile abgeben. Das Verschweissen, d.h. die Ausbildung der Nähte, erfolgt generell durch Druck und wärme. Die Herstellkosten sind gegenüber den durch Spritzguss hergestellten zweiteiligen Steckkapseln erheblich reduziert.

Der Herstellungsprozess für einteilige Kapseln, insbesondere der Rotary-Die-Prozess, stellt an das Kapselhüllmaterial eine Reihe von Anforderungen. Eine der Hauptvoraussetzungen ist die Fähigkeit des Kapselhüllmaterials hochelastische "endlose" Bänder mit einer ausreichenden Festigkeit auszubilden. So sollte das Young'sche Elastizitätsmodul E des Films im Augenblick des Umformens und Befüllens im Rotary-Die-Prozess nicht über 2 MPa und bevorzugt nicht über 1 MPa liegen. Mit anderen Worten, der Film darf dem Fülldruck des Füllmaterials, der letztendlich die Ausformung der Kapselhülle im Rotary-Die-Prozess bewirkt, bei dem durch die Maschine gegebenen Auflagedruck des Füllkeils nicht einen solchen Widerstand entgegensetzen, dass das Füllmaterial zwischen Film und Füllkeil herausläuft. Auf der anderen Seite muss die Festigkeit σₘ des Materials der Kapselhülle bei Standardbedingungen (25° C und 60% relativer Luftfeuchtigkeit) wenigstens 2 MPa aufweisen, um eine genügende Stabilität der Kapselhülle bei Raumtemperatur zu gewährleisten (aufgrund der Anforderungen bei Lagerung, Transportsicherheit und Gebrauch). Darüberhinaus sollte das Kapselhüllmaterial verschweissbar sein, um eine ausreichende Stabilität der Nahtstelle zu gewährleisten. Das Material der Formkörperhülle der erfindungsgemässen Formkörper, erfüllt diese Anforderungen in allen Aspekten. In einer bevorzugten Ausführungsform ist σₘ grösser oder gleich 3,5 MPa und noch bevorzugter grösser oder gleich 5 MPa. Die Kompatibilität des Kapselhüllmaterials mit einer Vielzahl von Inhaltsstoffen sollte darüber hinaus ebenfalls gegeben sein.

Teil der vorliegenden Erfindung ist weiterhin ein Verfahren zur Herstellung eines Formkörpers und insbesondere zur Herstellung einer Kapsel mit einteiliger Kapselhülle. Das Verfahren umfasst die folgenden Schritte:
a) Bereitstellen einer Zusammensetzung enthaltend mindestens ein filmbildendes Polymer ausgewählt aus der Gruppe bestehend aus Polyvinylalkoholderivaten mit mehr als 0.5 Mol % an von Hydroxylgruppen der Polyvinylalkoholstruktur verschiedenen Funktionellen Gruppen und einem Polyvinylalkoholanteil von größer oder gleich 50 Gew.-% bezogen auf das Gesamtgewicht des Polymers und mit einer Acetalgruppe pro Molekül wobei die Zusammensetzung mindestens einen Zusatzstoff in einem Bereich von 0.1 bis 70 Gew.% bezogen auf das Gesamtgewicht der Zusammensetzung enthält, die ausgewählt sind aus der Gruppe bestehend aus Wasser, Glycerin, Propylenglykol, Harnstoffe, N-Methyl-2-Pyrrolidon, Dimethylsulfoxid, Dimethylformamid, Polyoxyketonen, Sorbitol, Sorbitane, Oligomere, hydrierte Stärkeabbauprodukte, Polyethylenglykol, Polyethylenglykolfettsäureester, Glycerinfettsäureester, Polyglycerinfettsäureester, ethoxylierte Sorbitan-Fettsäureester, Polyvinylalkohole und -derivate und Polyglycerin mit einem Polymerisationsgrad von grösser oder gleich vier;
b) Erhitzen der Zusammensetzung auf Fliesstemperatur, welche vorteilhaft im Bereich von 40°C bis 130°C liegt;
c) Ausformen, insbesondere extrudieren, der auf Fliesstemperatur gebrachten Zusammensetzung als Film, vorteilhaft in einer Dicke von 0.01 bis 2.0 mm;
d) Gegebenenfalls Zwischenlagerung des Films;
e) Umformen des Films in einen Formkörper, insbesondere in eine Kapsel mit einteiliger Kapselhülle, mittels eines intermittierenden oder kontinuierlichen Formverfahrens, insbesondere mittels eines kontinuierlichen Form- und Füllverfahrens.

In einer bevorzugten Ausführungsform ist das in e) eingesetzte kontinuierliche Form- und Füllverfahren das Rotary-Die-Verfahren zur Herstellung gefüllter Kapseln mit einteiliger Kapselhülle.

Die Komponenten der in a) bereitgestellten Zusammensetzung können bereits in einem vorgeschalteten Verfahrensschritt in eine vorzugsweise homogene, lagerstabile Form z.B. in Granulatform, überführt werden. Die Zusammensetzung kann nach Lagerung weiterverarbeitet werden. Alternativ kann die Überführung der Zusammensetzung in einen homogenen Zustand während des Erhitzens in Schritt b) erfolgen.

In einer besonderen Ausführungsform wird der mittels Extruder extrudierte Film direkt der Umformungseinrichtung, d.h. ohne Zwischenlagerung des Filmes im Sinne einer In-line Produktion zugeführt.

Einteilige Kapseln aus dem vorab beschriebenen Verfahren sind insbesondere für technische Anwendungen von ausserordentlichem Interesse, da die Wasserlöslichkeit der Kapselhülle in bestimmten Temperaturbereichen einstellbar ist. So ist es möglich, Kapseln herzustellen, die Ihren Inhaltsstoff bereits bei Wassertemperaturen von 25 bis 30°C freisetzen. Dies ist mit den im Stand der Technik bekannten auf Gelatine basierenden Kapseln nicht möglich. Diese Eigenschaft ist für das Verkapseln von hochkonzentrierten Wasch- bzw. Tensidmischungen besonders relevant. Sie erlaubt das Auflösen der Kapselhülle und damit das Waschen bei Temperaturen von unter 40°C.

In einer bevorzugten Ausführungsform enthält der erfindungsgemässe Formkörper einen Inhalt aus einer, vorzugsweise flüssigen, Waschmittelzusammensetzung.

Besonders bevorzugt enthält die waschmittelzusammensetzung als Tensid N-Monoisopropanolammonium, N,N-Diisopropanolammonium- und N,N,N-Triisopropanol-ammoniumsalze der Fettalkohol-(C₁₂₋C₁₄)polyethylenglycol-(2EO)ethersulfate oder Mischungen derselben.

Tenside müssen, um für eine Verkapselung in wasserlöslichen bzw. -dispergierbaren Kapselmaterialien in Frage zu kommen, ganz spezifischen Anforderungen hinsichtlich des Molekulargewichtes, der Molekülform, dem pH-Wert, dem Wassergehalt, der viskosität und der chemischen Reaktivität genügen. Diese Anforderungen müssen aus Gründen der Kompatibilität des Kapselmaterials mit der Kapselhülle und mit den anderen Komponenten in der Waschmittelzusammensetzung, der Lagerstabilität der Kapsel, der biologischen Abbaubarkeit, dem Auflöse- und Freisetzungsverhalten in Wasser, der Waschaktivität, der Verkapselungstechnologie und der Anwendbarkeit für den Verbraucher (geringes Gewicht, platzsparend) erfüllt sein. Die obengenannten Fettalkohol-polyethylenglykolethersulfat-alkanolammoniumsalze erfüllen diese Kriterien in Kombination mit der erfindungsgemässen Formkörperhülle nahezu ideal. Die Waschmittelzusammensetzung kann noch weitere übliche Zusatzstoffe enthalten, wie z.B. Enzyme, andere Tenside, Füllstoffe, Vergrauungsinhibitoren, Bleichmittel, etc.

Auf der anderen Seite kann die Wasserlöslichkeit der Kapselhülle jedoch auch so eingestellt werden, dass sie sich erst bei hohen Temperaturen löst. Diese Eigenschaft macht die Kapseln interessant für das Verkapseln von Inhaltsstoffen, die nur bei erhöhten Temperaturen pump- und fliessfähig und somit verkapselbar sind. Diese Inhaltsstoffe können auch einen gewissen Prozentsatz an Wasser enthalten ohne die Kapselhülle zu schädigen.

Dieselbe unter a) genannte Zusammensetzung lässt sich jedoch auch durch Spritzgiessen zu Formkörpern und insbesondere zu sogenannten Hartkapseln, d.h. zweiteiligen Kapseln, verarbeiten. Dieses Verfahren beinhaltet das Bereitstellen und Mischen der Komponenten der Zusammensetzung oder das Bereitstellen der bereits homogenen Zusammensetzung in einem ersten Schritt, das Überführen in den fliessfähigen Zustand, wobei in der Regel Temperaturen von 40°C bis 130°C erforderlich sind, ein anschliessendes Spritzgiessen der auf Fliesstemperatur gebrachten Zusammensetzung in vorgefertigte Spritzgussformteile, gefolgt von einem Entformen während oder nach dem Erkalten der Zusammensetzung aus den Spritzgussformteilen.

Ebenso kann das Formen von Hartkapseln durch Tauchen in einen mit Wasser oder Alkohol verdünnte erfindungsgemässe Schmelze (Lösung) erfolgen.

Alternativ kann die unter a) genannte Zusammensetzung auch mittels Tauchen oder Sprühen auf Körper beliebiger Form aufgebracht werden zum Erzeugen einer Schutzschicht. Diese Schutzschicht kann vor der Weiterverarbeitung oder Anwendung durch Lösen der Schutzschicht beispielsweise mit Wasser entfernt werden. Die Zusammensetzung wird für den Tauch- oder Spritzvorgang in Lösemittel gelöst. Bevorzugte Lösemittel sind dabei Wasser, niedermolekulare Alkohole wie Methanol, Ethanol, Butanol oder Gemische dieser Lösemittel. Das Tauchen kann auch aus einer Schmelze durchgeführt werden, in diesem Fall kann das Lösemittel entfallen.

Teil der Erfindung ist weiterhin eine Zusammensetzung für die Herstellung von Formkörpern und Schutzschichten, welche wenigstens ein Polyglycerin mit einem Polymerisationsgrad von grösser oder gleich 4 enthält und wenigstens ein Polymer, welches ausgewählt ist aus der Gruppe bestehend aus Stärke und Stärkederivaten.

Als Stärke werden im Sinne der Erfindung sowohl native Stärken bezeichnet als auch physikalisch modifizierte, jedoch im wesentlichen nicht depolymerisierte Stärken, wie z.B. Quellstärken. Die Stärken sind nicht beschränkt auf eine Auswahl bestimmter sie produzierender Pflanzen. Die Auswahl der Stärke (Kartoffelstärke, Reisstärke, Maisstärke, etc.) hängt von dem jeweiligen verwendungszweck ab.

Alle in ihrer primären Polymerstruktur veränderten Stärken (depolymerisierte Stärken, chemische Fremdgruppen tragende modifizierte Stärken) sollen im Kontext der vorliegenden Erfindung unter den Begriff Stärkederivate fallen. Depolymerisierte Stärken sind für die erfindungsgemässe Zusammensetzung geeignet.

Bevorzugte Stärkederivate sind jedoch chemisch modifizierte Stärkederivate. Der Anteil der Stärke soll dabei grösser oder gleich 20 w/w, bevorzugterweise grösser oder gleich 30 w/w und besonders bevorzug 50 w/w sein, um unter die Bezeichnung Stärkederivat zu fallen. Als für die erfindungsgemässe Zusammensetzung geeignet haben sich dabei Stärkederivate, die mit Polyvinylalkoholen derivatisiert (acetalisiert) sind.

Als besonders geeignet haben sich solche Stärkederivate erwiesen, die mit acetalisch gebundenen Polyglycerinen derivatisiert sind. Es werden dabei Polyglycerin/Stärke Copolymere gebildet.

Generell erfolgt die Derivatisierung - unabhängig vom Derivatisierungsreagenz - sowohl an den Amylose- als auch an den Amylopectinmolekülen. Die Verteilung der Fremdgruppen auf Amylose- und Amylopectinemolekülen hängt neben anderen Faktoren (z.B. die Herstellungsmethode) von der Zugänglichkeit der Amylose- und Amylopectinketten in der Stärke für das Derivatisierungsreagenz ab. Diese Effekte sind dem Fachmann vertraut und sollen hier nicht weiter ausgeführt werden.

Für bestimmte Einsatzzwecke kann es jedoch auch notwendig sein, entweder nur die mit Polyglycerin derivatisierten Amylosemoleküle oder nur die mit Polyglycerin acetalisierten Amylopectine einzusetzen. Dies setzt jedoch die Trennung zwischen Amylopectin und Amylosemolekülen voraus, was entweder vor der Derivatisierungsreaktion stattfinden kann oder danach.

Das Copolymerisat Polyglycerin/Stärke übernimmt die Aufgabe eines inneren Weichmachers (Definition innerer Weichmacher entsprechend, Römpp, 9. Auflage). Die Herstellung dieses Stärke/Polyglycerin Copolymerisats kann dabei analog zu den in EP 771 329 bzw. PCT/AT96/00093 beschriebenen Synthesen erfolgen. Die Herstellungsmethode ist jedoch nicht nur auf diese Methode beschränkt. Die Copolymerisation der Stärke mit Polyglycerinen wird vorzugsweise mit solchen Polyglycerinen durchgeführt, die einen Polymerisationsgrad bis oder gleich 10 aufweisen.

Die Zusammensetzung kann zusätzlich zum Stärke/Polyglycerin Copolymer nicht gebundene Polyglycerine enthalten. Dies kann/können unreagiertes Polyglycerin/Polyglycerine aus der Synthese sein, welche nach der Copolymerisation nicht entfernt wurden. Alternativ können dem Copolymerisat bei Bedarf Polyglycerin/Polyglycerine zusätzlich zugegeben werden.

Das Copolymerisat Stärke/Polyglycerin kann jedoch aufgrund seiner inneren Weichmacherwirkung auch ohne zusätzlich ungebundenes Polyglycerin zu Formkörpern jeglicher Gestalt verarbeitet werden. Teil der vorliegenden Erfindung ist deshalb weiterhin eine Zusammensetzung für die Herstellung von Formkörpern und Schutzschichten, welche wenigstens ein Copoylmerisat aus Stärke und Polyglycerin enthält, wobei wenigstens ein Typ von Polyglycerin acetalisch an die Stärke gebunden vorliegt.

Polyglycerin kann auch an Cellulosemoleküle acetalisch gebunden werden. Auch bei den Polyglycerin/Cellulosecopolymerisaten tritt der für die Stärke/Polyglycerincopolymerisate beschriebene innere Weichmachereffekt bei Zusammensetzungen für die Herstellung von Formkörpern auf. Auch die Cellulose / Polyglycerincopolymerisate können ungebundenes Polyglycerin in einer gemeinsamen Zusammensetzung enthalten, sind jedoch wie die Stärke / Copolymerisate ohne das Vorhandensein von ungebundenem Polyglycerin zu Formkörpern verarbeitbar. Teil der vorliegenden Erfindung ist deshalb weiterhin eine Zusammensetzung für die Herstellung von Formkörpern und Schutzschichten, welche wenigstens ein Copolymerisat aus Cellulose und Polyglycerin enthält, wobei wenigstens ein Typ von Polyglycerin acetalisch an die Cellulose gebunden vorliegt. Die Kettenlänge der Cellulosemoleküle ist dabei so gewählt, dass eine Derivatisierung ermöglicht wird.

Im Zuge der vorliegenden Erfindungen werden die technischen Begriffe, sofern nicht in der Beschreibung explizit in ihrer Bedeutung erwähnt, definiert gemäss Römpp, Chemielexikon, Hrsg. J. Falbe, M. Regitz, Georg Thieme Verlag, Stuttgart, 9. Auflage,
- Figur 1: zeigt einen ersten erfindungsgemässen Formkörper, welcher von einem zweiten erfindungsgemässen Formkörper in Funktion eines Sekundärpackmittel, umgeben ist (im Querschnitt)
- Figur 2: zeigt mehrere erste erfindungsgemässe Formkörper, welche in der Gesamtheit durch einen zweiten Formkörper in Funktion eines Sekundärpackmittel umgeben sind.

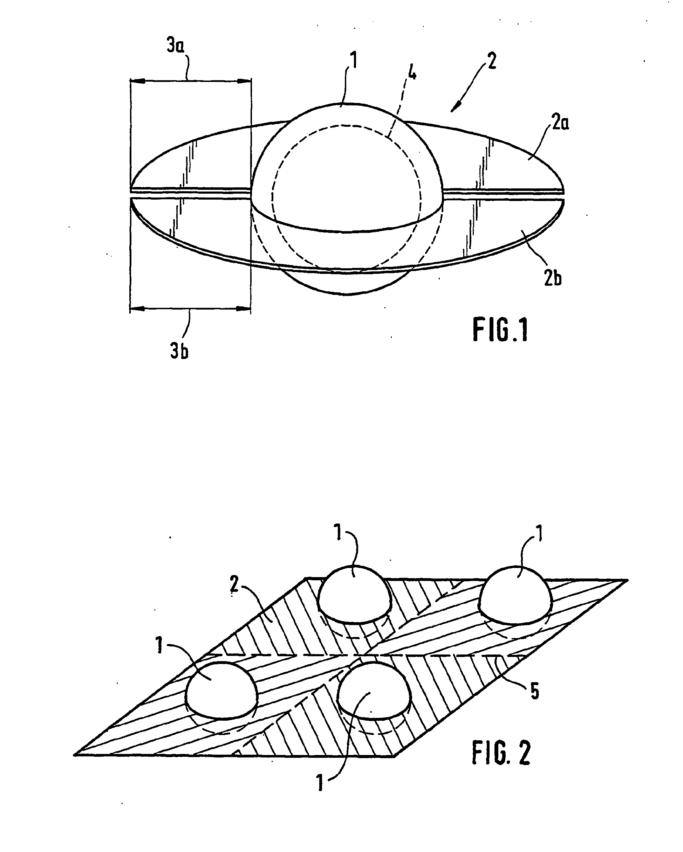

Figur 1 zeigt einen ersten erfindungsgemässen Formkörper 1 in Form einer Kapsel mit einteiliger Kapselhülle 4 und einem Kapselinhalt (nicht gezeigt), beispielsweise ein Waschmittelkonzentrat. Der Formkörper 1 wird zur Kindersicherung sowie zur Erhöhung der Lagerbeständigkeit und -sicherheit sowie zur Transportstabilität mit einem zweiten Formkörper 2 umgeben, dem Sekundärpackmittel. Das Sekundärpackmittel 2 kann aus zwei Teilen bestehen 2a und 2b, die beispielsweise durch Tiefziehen von Folien ausgeformt werden. Die beiden Teile werden am Ort ihrer Kontaktfläche 3a und 3b verbunden. Dies kann je nach Materialzusammensetzung durch Verkleben oder Verschweissen geschehen. Je nach Material, können Klebstoffe aufgebracht werden oder aber das Material entwickelt bei Befeuchtung Klebeeingenschaften. Das Sekundärpackmittel 2 und die Formkörperhülle 4 des erfindungsgemässen Formkörpers 1, das Primärpackmittel, sind aus gleichen oder ähnlichen Materialien hergestellt und enthalten als filmbildendes Polymermaterial wenigstens ein Polyvinylacetal gemäss EP 771 329 sowie wenigstens einen der in der Beschreibungseinleitung erwähnten Zusatzstoffe. Diese Ausgestaltung hat den Vorteil, dass der Formkörper mit Inhalt samt Sekundärpackmittel der Endanwendung zugeführt wird. Ein aufwendiges Auspacken des Formkörpers aus dem Sekundärpackmittel und/oder ein Auspacken des Formkörperinhalts aus dem Primärpackmittel entfällt.

Figur 2 zeigt mehrere Formkörper 1, die von einem weiteren Formkörper 2, dem Sekundärpackmittel 2 gesamthaft umgeben sind. In der gezeigten Ausführungsform ist das Sekundärpackmittel aus einem Stück geformt mit Sollbruchstellen 5, um einzelne erfindungsgemässe Formkörper ihrem Verwendungszweck samt Sekundärpackmittel zuführen zu können.

### Beispiele:

### Vergleichs Beispiel 1

| | | |
|---|---|---|
| Basis-Compound: | Polyvinylacetal (gemäss EP 771329) Granulat Typ 3-90/9/2T5 (Bezug Constantia/Wien) | |
| Zusammensetzung: | 68% Basiscompound | |
| | 8% | Wasser |
| | 22% | Glycerin |
| | 1% | Glycerinmonostearat |
| | 1% | Lecithin |
| Bandherstellung: | Chill-Roll-Extrusion | |
| | Bandstärke 600µm | |
| Kapselherstellung: | Rotary-Die Prozess | |
| Füllgut: | Paraffinöl | |
| Füllmenge: | 0.5g/Kapsel | |
| Form: | ovaloid | |
| Trocknung: | entfällt | |
| Prüfung: | Kapselmantel vollständig löslich in Wasser bei 19° | |

### Vergleichs Beispiel 2

| | | |
|---|---|---|
| Basis-Compound: | Polyvinylacetal (gemäss EP771329) Granulat Typ 3.5/11/1 (Bezug Constantia/Wien) | |
| Zusammensetzung: | 68 % | Basiscompound |
| | 8% | Wasser |
| | 22% | Glycerin |
| | 1% | Glycerinmonostearat |
| | 1% | Lecithin |
| Bandherstellung: | Chill-Roll-Extrusion | |
| | Bandstärke 600µm | |
| Kapselherstellung: | Rotary-Die Prozess | |
| Füllgut: | Paraffinöl | |
| Füllmenge: | 0.5g/Kapsel | |
| Form: | ovaloid | |
| Trocknung: | entfällt | |
| Prüfung: | Kapselmantel vollständig löslich in Wasser bei 19° | |

### Vergleichs Beispiel 3

| | | |
|---|---|---|
| Basiscompound: | Polyvinylacetal (gemäss EP 771329) Granulat Typ 3-40/9 (Bezug Constantia/Wien) | |
| Zusammensetzung: | 65 % | Basiscompound |
| | 4% | Wasser |
| | 10% | Glycerin |
| | 20% | Sorbitol |
| | 1% | Glycerinmonostearat |
| Bandherstellung: | Chill-Roll-Extrusion | |
| | Bandstärke 600µm | |
| Kapselherstellung: | Rotary-Die Prozess | |
| Füllgut: | Paraffinöl | |
| Füllmenge: | 1 g/Kapsel | |
| Form: | rund | |
| Trocknung: | entfällt | |
| Prüfung: | Kapselmantel vollständig löslich in Wasser bei 19° | |

In einem Vergleichsversuch wurde ein gemäss EP 771 329 acetalisierter Polyvinylalkohol Typ 3-90/9/2T5/Constantia Wien) der Zusammensetzung: 41 Gew.% Stärkeanteil; 11% Glycerin und 8,4% Wasser einmal mit Glycerin (Beispiel 4) und einmal mit dem gleichen Gewichtsanteil Decaglycerin (Beispiel 5) versetzt.

| **Vergleichs Beispiel 4** | **Beispiel 1** |
|---|---|
| 63 g Extrudat | 63 g Exdrudat |
| 14 g Glycerin | 14 g Decaglycerin |

Beide Komponenten wurden in einem Brabender Kneter bei 130°C in eine homogene Zusammensetzung überführt und zu einem Film von 600 µm gepresst. Alternativ kann in einem Extruder aufgeschmolzen (engkämmender, gleichdrehender Doppelschnecken Extruder bei 80 - 130°C; 50 - 300 rpm) und durch eine Schlitzdüse auf ein paar gekühlte Walzen < 40°C geführt zum Film extrudiert werden. Die Bruchdehnung des Filmes wurde nach DIN 51 562-1 -4 bei 21°C und 21% relativer Luftfeuchtigkeit als Mittelwert aus vier Einzelmessungen gemessen.

**Max. gemessene Bruchdehnung [in %] :**

| Vergleichs Beispiel 4 | Beispiel 1 |
|---|---|
| 141,99 | 214,79 |

**Bruchspannung [Mpa]:**

| Vergleichs Beispiel 4 | Beispiel 1 |
|---|---|
| 4,65 | 3,27 |

**Young'sches Elastizitätsmodul (Mpa).**

| Vergleichs Beispiel 4 | Beispiel 1 |
|---|---|
| 40.34 | 12.54 |

## Patentansprüche

1. Formkörper umfassend eine Formkörperhülle und einen Formkörperinhalt, **dadurch gekennzeichnet, dass** die Formkörperhülle wenigstens ein filmbildendes Polymer, das ausgewählt ist aus der Gruppe bestehend aus Polyvinylalkoholderivaten mit mehr als 0.5 Mol% an von Hydroxylgruppen der Polyvinylalkoholstruktur verschiedenen funktionellen Gruppen und einem Polyvinylalkoholanteil von grösser oder gleich 50 Gew.-% bezogen auf das Gesamtgewicht des Polymers und mit mindestens einer Acetalgruppe pro Molekül, sowie wenigstens noch ein Polyglycerin mit einem Polymerisationsgrad von grösser oder gleich vier enthält.

2. Formkörper nach Anspruch 1, **dadurch gekennzeichnet, dass** das Polyvinylalkoholderivat einen Restgehalt an Acetyl-Gruppen im Bereich von 13 bis 0.5 Mol%, bevorzugt von 12 bis 1 Mol% aufweist.

3. Formkörper nach Anspruch 1 oder 2, **dadurch gekennzeichnet, dass** die Acetalgruppe durch Acetalisierungsreaktion von mindestens einem Polyvinylalkohol oder Polyvinylalkoholderivat mit mindestens einem mindestens eine Carbonylgruppe oder präsumptive Carbonylgruppe enthaltenden Naturstoff und/oder Naturstoffderivat eingeführt ist.

4. Formkörper nach einem der Ansprüche 1 bis 3, **dadurch gekennzeichnet, dass** der mittlere Polymerisationsgrad des Polyvinylalkoholderivates im Bereich von 200 bis 2700, bevorzugt von 300 bis 1500 und noch bevorzugter von 400 bis 1000 liegt.

5. Formkörper nach Anspruch 3, **dadurch gekennzeichnet, dass** der Naturstoff ausgewählt ist aus der Gruppe bestehend aus Monosacchariden, Disacchariden, nativen und depolymerisierten Polysacchariden.

6. Formkörper nach Anspruch 5, **dadurch gekennzeichnet, dass** das depolymerisierte Polysaccharid depolymerisierte Stärke, insbesondere Kartoffelstärke ist.

7. Formkörper nach einem der Ansprüche 1 bis 6, **dadurch gekennzeichnet, dass** die Formkörperhülle noch mindestens eine weitere Substanz in einem Bereich von 0.1 bis 70 Gew.% bezogen auf das Gesamtgewicht der Formkörperhülle enthält, welche ausgewählt ist aus der Gruppe bestehend aus Wasser, Glycerin, Propylenglykol, Harnstoffe, N-Methyl-2-Pyrrolidon, Dimethylsulfoxid, Dimethylformamid, Polyoxyketonen, Sorbitol, Sorbitane, Oligomere, hydrierte Stärkeabbauprodukte, Polyethylenglykol, Polyethylenglykolfettsäureester, Glycerinfettsäureester, Polyglycerinfettsäureester, ethoxylierten Sorbitan-Fettsäureestern, Polyvinylalkohole und -derivate.

8. Formkörper nach einem der Ansprüche 1 bis 7, **dadurch gekennzeichnet, dass** das Polyglycerin Decaglycerin ist.

9. Formkörper nach einem der Ansprüche 1 bis 8, **dadurch gekennzeichnet, dass** das Polyglycerin in einer Menge von 0.1 Gew.% bis 70 Gew.%, bevorzugt von 10 Gew.% bis 40 Gew.% bezogen auf das Gesamtgewicht der Formkörperhülle vorliegt.

10. Formkörper nach einem der Ansprüche 1 bis 9, **dadurch gekennzeichnet, dass** der Inhalt von fester, pastöser, flüssiger oder gasförmiger Konsistenz ist.

11. Formkörper nach Anspruch 10, wobei der Formkörperinhalt ein zweiter Formkörper gemäss einem der Ansprüche 1 bis 10 ist.

12. Formkörper nach Anspruch 10, **dadurch gekennzeichnet, dass** der Formkörperinhalt eine vorzugsweise flüssige Waschmittelzusammensetzung ist.

13. Formkörper nach Anspruch 12,**dadurch gekennzeichnet, dass** die Waschmittelzusammensetzung Tenside enthält, die ausgewählt sind aus der Gruppe bestehend aus N-Monoisopropanolammonium, N,N-Diisopropanolammonium- und N,N,N-Triisopropanolammoniumsalzen der Fettalkohol-(C₁₂-C₁₄)polyethylenglycol-(2E0)ethersulfate.

14. Formkörper nach einem der Ansprüche 1 bis 13, **dadurch gekennzeichnet, dass** der Formkörper eine Kapsel mit ein- oder zweiteiliger Kapselhülle ist.

15. Formkörper gemäss Anspruch 14, **dadurch gekennzeichnet, dass** die Kapsel im Rotary-Die-Verfahren herstellbar ist.

16. Verfahren zur Herstellung eines Formkörpers, insbesondere Kapsel mit einteiliger Kapselhülle, mit den folgenden Schritten:
a) Bereitstellen einer Zusammensetzung enthaltend mindestens ein filmbildendes Polymer ausgewählt aus der Gruppe bestehend aus Polyvinylalkoholderivaten mit mehr als 0.5 Mol% an von Hydroxylgruppen der Polyvinylalkoholstruktur verschiedenen funktionellen Gruppen und einem Polyvinylalkoholanteil von grösser oder gleich 50 Gew.-% bezogen auf das Gesamtgewicht des Polymers und mit mindestens einer Acetalgruppe pro Molekül sowie wenigstens noch ein Polyglycerin mit einem Polymerisationsgrad von grösser oder gleich vier, wobei die Zusammensetzung mindestens einen Zusatzstoff in einem Bereich von 0.1 bis 70 Gew.% bezogen auf das Gesamtgewicht der Zusammensetzung enthält, ausgewählt aus der Gruppe bestehend aus Wasser, Glycerin, Propylenglykol, Harnstoffe, N-Methyl-2-Pyrrolidon, Dimethylsulfoxid, Dimethylformamid, Polyoxyketonen, Sorbitol, Sorbitane, Oligomere, hydrierte Stärkeabbauprodukte, Polyethylenglykol, Polyethylenglykolfettsäureester, Glycerinfettsäureester, Polyglycerinfettsäureester, ethoxylierten Sorbitan-Fettsäureestern, Polyvinylalkohole und -derivate;
b) Erhitzen der Zusammensetzung auf Fliesstemperatur, vorzugsweise im Bereich von 40°C bis 130°C;
c) Ausformen, insbesondere Extrudieren der auf Fliesstemperatur gebrachten Zusammensetzung als Film;
d) gegebenenfalls Zwischenlagerung des Films;
e) Umformen des Films in einen Formkörper, insbesondere in eine Kapsel mit einteiliger Kapselhülle, mittels eines intermittierenden oder kontinuierlichen Formverfahrens, insbesondere kontinuierlichen Form- und Füllverfahrens.

17. Verfahren nach Anspruch 16, **dadurch gekennzeichnet dass** das kontinuierliche Formverfahren das Rotary-Die-Verfahren ist.

18. Verfahren zur Herstellung eines Formkörpers, insbesondere einer zweiteiligen Kapselhülle, mit den folgenden Schritten
a) Bereitstellen einer Zusammensetzung enthaltend mindestens ein filmbildendes Polymer ausgewählt aus der Gruppe bestehend aus Polyvinylalkoholderivaten mit mehr als 0.5 Mol% an von Hydroxylgruppen der Polyvinylalkoholstruktur verschiedenen funktionellen Gruppen und einem Polyvinylalkoholanteil von grösser oder gleich 50 Gew.-% bezogen auf das Gesamtgewicht des Polymers und mit mindestens einer Acetalgruppe pro Molekül sowie wenigstens noch ein Polyglycerin mit einem Polymerisationsgrad von grösser oder gleich vier, wobei die Zusammensetzung mindestens einen Zusatzstoff in einem Bereich von 0.1 bis 70 Gew.% bezogen auf das Gesamtgewicht der Zusammensetzung enthält, ausgewählt aus der Gruppe bestehend aus Wasser, Glycerin, Propylenglykol, Harnstoffe, N-Methyl-2-Pyrrolidon, Dimethylsulfoxid, Dimethylformamid, Polyoxyketonen, Sorbitol, Sorbitane, Oligomere, hydrierte Stärkeabbauprodukte, Polyethylenglykol, Polyethylenglykolfettsäureester, Glycerinfettsäureester, Polyglycerinfettsäureester, ethoxylierten Sorbitan-Fettsäureestern, Polyvinylalkohole und -derivate;
b) Erhitzen der Zusammensetzung auf Fliesstemperatur, vorzugsweise im Bereich von 40°C bis 150°C;
c) Spritzgiessen der auf Fliesstemperatur gebrachten Zusammensetzung in vorgefertigte Spritzgussformteile;
d) Entformen der in c) spritzgegossenen Formteile aus der Spritzgussform während oder nach dem Erkalten.

19. Verfahren zum Herstellen einer Schutzschicht, **gekennzeichnet durch** die folgenden Schritte:
a) Bereitstellen einer Zusammensetzung enthaltend mindestens ein filmbildendes Polymer ausgewählt aus der Gruppe bestehend aus Polyvinylalkoholderivaten mit mehr als 0.5 Mol% an von Hydroxylgruppen der Polyvinylalkoholstruktur verschiedenen funktionellen Gruppen und einem Polyvinylalkoholanteil von grösser oder gleich 50 Gew.-% bezogen auf das Gesamtgewicht des Polymers und mit mindestens einer Acetalgruppe pro Molekül sowie wenigstens noch ein Polyglycerin mit einem Polymerisationsgrad von grösser oder gleich vier, wobei die Zusammensetzung mindestens einen Zusatzstoff in einem Bereich von 0.1 bis 70 Gew.% bezogen auf das Gesamtgewicht der Zusammensetzung enthält, ausgewählt aus der Gruppe bestehend aus Wasser, Glycerin, Propylenglykol, Harnstoffe, N-Methyl-2-Pyrrolidon, Dimethylsulfoxid, Dimethylformamid, Polyoxyketonen, Sorbitol, Sorbitane, Oligomere, hydrierte Stärkeabbauprodukte, Polyethylenglykol, Polyethylenglykolfettsäureester, Glycerinfettsäureester, Polyglycerinfettsäureester, ethoxylierten Sorbitan-Fettsäureestern, Polyvinylalkohole und -derivate;
b) Lösen der Zusammensetzung in einem geeigneten Lösemittel oder Lösemittelgemisch;
c) Tauchen oder Sprühen der Lösung auf einen Körper beliebiger Form;
d) Trocknen der Lösung **durch** Entfernen des Lösemittels.

## Claims

1. Moulding comprising a moulding shell and a moulding content, **characterized in that** the moulding shell contains at least one film-forming polymer which is chosen from the group consisting of polyvinyl alcohol derivatives with more than 0.5 mol.-% functional groups different from hydroxyl groups of the polyvinyl alcohol structure and a polyvinyl alcohol portion greater than or equal to 50 wt.-% relative to the overall weight of the polymer and with at least one acetal group per molecule, and also at least one polyglycerol with a degree of polymerization greater than or equal to four.

2. Moulding according to claim 1, **characterized in that** the polyvinyl alcohol derivative has a residual content of acetyl groups in the range from 13 to 0.5 mol.-%, preferably from 12 to 1 mol.-%.

3. Moulding according to claim 1 or 2, **characterized in that** the acetal group is introduced by acetalization reaction of at least one polyvinyl alcohol or polyvinyl alcohol derivative with at least one natural product and/or natural substance derivative containing at least one carbonyl group or presumptive carbonyl group.

4. Moulding according to one of claims 1 to 3, **characterized in that** the average degree of polymerization of the polyvinyl alcohol derivative is in the range from 200 to 2700, preferably from 300 to 1500 and still more preferably from 400 to 1000.

5. Moulding according to claim 3, **characterized in that** the natural product is chosen from the group consisting of monosaccharides, disaccharides, native and depolymerized polysaccharides.

6. Moulding according to claim 5, **characterized in that** the depolymerized polysaccharide is depolymerized starch, in particular potato starch.

7. Moulding according to one of claims 1 to 6, **characterized in that** the moulding shell also contains a further substance in a range from 0.1 to 70 wt.-% relative to the overall weight of the moulding shell, which is chosen from the group consisting of water, glycerol, propylene glycol, ureas, N-methyl-2-pyrrolidone, dimethyl sulphoxide, dimethyl formamide, polyoxyketones, sorbitol, sorbitans, oligomers, hydrogenated starch decomposition products, polyethylene glycol, polyethylene glycol fatty acid esters, glycerol fatty acid esters, polyglycerol fatty acid esters, ethoxylated sorbitan fatty acid esters, polyvinyl alcohols and derivatives.

8. Moulding according to one of claims 1 to 7, **characterized in that** the polyglycerol is decaglycerol.

9. Moulding according to one of claims 1 to 8, **characterized in that** the polyglycerol is present in a quantity of 0.1 wt.-% to 70 wt.-%, preferably 10 wt.-% to 40 wt.-% relative to the overall weight of the moulding shell.

10. Moulding according to one of claims 1 to 9, **characterized in that** the content is of solid, paste-like, liquid or gaseous consistency.

11. Moulding according to claim 10, wherein the moulding content is a second moulding according to one of claims 1 to 10.

12. Moulding according to claim 10, **characterized in that** the moulding content is a preferably liquid detergent composition.

13. Moulding according to claim 12, **characterized in that** the detergent composition contains surfactants which are chosen from the group consisting of N-monoisopropanol ammonium, N,N-diisopropanol ammonium and N,N,N-triisopropanol ammonium salts of fatty alcohol (C₁₂₋C₁₄) polyethylene glycol (2EO) ether sulphates.

14. Moulding according to one of claims 1 to 13, **characterized in that** the moulding is a capsule with a one- or two-part capsule shell.

15. Moulding according to claim 14, **characterized in that** the capsule can be prepared in the rotary-die process.

16. Process for the preparation of a moulding, in particular a capsule with a one-part capsule shell, with the following steps:
a) Provision of a composition containing at least one film-forming polymer chosen from the group consisting of polyvinyl alcohol derivatives with more than 0.5 mol.-% functional groups different from hydroxyl groups of the polyvinyl alcohol structure and a polyvinyl alcohol portion greater than or equal to 50 wt.-% relative to the overall weight of the polymer and with at least one acetal group per molecule, and also at least one polyglycerol with a degree of polymerization greater than or equal to four, wherein the composition contains at least one additive in a range from 0.1 to 70 wt.-% relative to the overall weight of the composition, chosen from the group consisting of water, glycerol, propylene glycol, ureas, N-methyl-2-pyrrolidone, dimethyl sulphoxide, dimethyl formamide, polyoxyketones, sorbitol, sorbitans, oligomers, hydrogenated starch decomposition products, polyethylene glycol, polyethylene glycol fatty acid esters, glycerol fatty acid esters, polyglycerol fatty acid esters, ethoxylated sorbitan fatty acid esters, polyvinyl alcohols and derivatives;
b) Heating of the composition to flow temperature, preferably in the range from 40°C to 130°C;
c) Shaping, in particular extruding, as film of the composition raised to flow temperature;
d) Optional interim storage of the film;
e) Reshaping of the film into a moulding, in particular into a capsule with a one-part capsule shell, by means of an intermittent or continuous shaping process, in particular a continuous shaping and filling process.

17. Process according to claim 16, **characterized in that** the continuous moulding process is the rotary-die process.

18. Process for the preparation of a moulding, in particular a two-part capsule shell, with the following steps
a) Provision of a composition containing at least one film-forming polymer chosen from the group consisting of polyvinyl alcohol derivatives with more than 0.5 mol.-% functional groups different from hydroxyl groups of the polyvinyl alcohol structure and a polyvinyl alcohol portion greater than or equal to 50 wt.-% relative to the overall weight of the polymer and with at least one acetal group per molecule, and also at least one polyglycerol with a degree of polymerization greater than or equal to four, wherein the composition contains at least one additive in a range from 0.1 to 70 wt.-% relative to the overall weight of the moulding shell which is chosen from the group consisting of water, glycerol, propylene glycol, ureas, N-methyl-2-pyrrolidone, dimethyl sulphoxide, dimethyl formamide, polyoxyketones, sorbitol, sorbitans, oligomers, hydrogenated starch decomposition products, polyethylene glycol, polyethylene glycol fatty acid esters, glycerol fatty acid esters, polyglycerol fatty acid esters, ethoxylated sorbitan fatty acid esters, polyvinyl alcohols and derivatives;
b) Heating of the composition to flow temperature, preferably in the range from 40°C to 150°C;
c) Injection moulding into prefabricated injection mouldings of the composition raised to flow temperature;
d) Demoulding of the mouldings injection moulded in c) from the mould during or after cooling.

19. Process for the preparation of a protective layer, **characterized by** the following steps:
a) Provision of a composition containing at least one film-forming polymer chosen from the group consisting of polyvinyl alcohol derivatives with more than 0.5 mol.-% functional groups different from hydroxyl groups of the polyvinyl alcohol structure and a polyvinyl alcohol portion greater than or equal to 50 wt.-% relative to the overall weight of the polymer and with at least one acetal group per molecule, and also at least one polyglycerol with a degree of polymerization greater than or equal to four, wherein the composition contains at least one additive in a range from 0.1 to 70 wt.-% relative to the overall weight of the composition, chosen from the group consisting of water, glycerol, propylene glycol, ureas, N-methyl-2-pyrrolidone, dimethyl sulphoxide, dimethyl formamide, polyoxyketones, sorbitol, sorbitans, oligomers, hydrogenated starch decomposition products, polyethylene glycol, polyethylene glycol fatty acid esters, glycerol fatty acid esters, polyglycerol fatty acid esters, ethoxylated sorbitan fatty acid esters, polyvinyl alcohols and derivatives;
b) Dissolution of the composition in a suitable solvent or solvent mixture;
c) Dip-coating or spraying of the solution onto a body of any shape;
d) Drying of the solution by removing the solvent.

## Revendications

1. Objet façonné, comprenant une enveloppe d'objet façonné et un contenu d'objet façonné, **caractérisé en ce que** l'enveloppe d'objet façonné contient au moins un polymère filmogène, qui est choisi dans le groupe constitué par des dérivés de poly(alcool vinylique) contenant plus de 0,5 % en moles de groupes fonctionnels différents des groupes hydroxyle de la structure poly(alcool vinylique), et une proportion de poly(alcool vinylique) supérieure ou égale à 50 % en poids par rapport au poids total du polymère, et comportant au moins un groupe acétal par molécule, ainsi qu'en outre au moins un polyglycérol ayant un degré de polymérisation supérieur ou égal à quatre.

2. Objet façonné selon la revendication 1, **caractérisé en ce que** le dérivé de poly(alcool vinylique) présente une teneur résiduelle en groupes acétyle comprise dans la plage de 13 à 0,5 % en moles, de préférence de 12 à 1 % en moles.

3. Objet façonné selon la revendication 1 ou 2, **caractérisé en ce que** le groupe acétal est introduit par une réaction d'acétalisation d'au moins un poly(alcool vinylique) ou dérivé de poly(alcool vinylique) avec au moins une substance naturelle et/ou un dérivé de substance naturelle contenant au moins un groupe carbonyle ou un groupe carbonyle présomptif.

4. Objet façonné selon l'une des revendications 1 à 3, **caractérisé en ce que** le degré moyen de polymérisation du dérivé de poly(alcool vinylique) est compris dans la plage de 200 à 2 700, de préférence de 300 à 1 500 et d'une manière encore plus préférée de 400 à 1 000.

5. Objet façonné selon la revendication 3, **caractérisé en ce que** la substance naturelle est choisie dans le groupe constitué par des monosaccharides, des disaccharides, et des polysaccharides natifs et dépolymérisés.

6. Objet façonné selon la revendication 5, **caractérisé en ce que** le polysaccharide dépolymérisé est de l'amidon dépolymérisé, en particulier de l'amidon de pomme de terre.

7. Objet façonné selon l'une des revendications 1 à 6, **caractérisé en ce que** l'enveloppe d'objet façonné contient en outre au moins une autre substance en une quantité comprise dans la plage de 0,1 à 70 % en poids par rapport au poids total de l'enveloppe d'objet façonné, substance qui est choisie dans le groupe constitué par l'eau, le glycérol, le propylèneglycol, des urées, la N-méthyl-2-pyrrolidone, le diméthylsulfoxyde, le diméthylformamide, des polyoxycétones, le sorbitol, des sorbitans, des oligomères, des produits de dégradation de l'amidon hydrogénés, un polyéthylèneglycol, des esters d'acides gras du polyéthylèneglycol, des esters d'acides gras du glycérol, des esters d'acides gras de polyglycérol, des esters d'acides gras de sorbitan éthoxylés, des poly(alcool vinylique) et leurs dérivés.

8. Objet façonné selon l'une des revendications 1 à 7, **caractérisé en ce que** le polyglycérol est le décaglycérol.

9. Objet façonné selon l'une des revendications 1 à 8, **caractérisé en ce que** le polyglycérol est présent en une quantité de 0,1 % en poids à 70 % en poids, de préférence de 10 % en poids à 40 % en poids, par rapport au poids total de l'enveloppe d'objet façonné.

10. Objet façonné selon l'une des revendications 1 à 9, **caractérisé en ce que** le contenu a une consistance solide, pâteuse, liquide ou gazeuse.

11. Objet façonné selon la revendication 10, le contenu de l'objet façonné étant un deuxième objet façonné selon l'une des revendications 1 à 10.

12. Objet façonné selon la revendication 10, **caractérisé en ce que** le contenu de l'objet façonné est une composition détergente de préférence liquide.

13. Objet façonné selon la revendication 12, **caractérisé en ce que** la composition détergente contient des tensioactifs qui sont choisis dans le groupe constitué par des sels de N-monoisopropanolammonium, de N,N-diisopropanolammonium et de N,N,N-triisopropanolammonium d'alcools gras-(C₁₂ à C₁₄)polyéthylèneglycol- (2OE) éthersulfates.

14. Objet façonné selon l'une des revendications 1 à 13, **caractérisé en ce que** l'objet façonné est une capsule comportant une enveloppe de capsule, en une ou deux parties.

15. Objet façonné selon la revendication 14, **caractérisé en ce que** la capsule peut être fabriquée par le procédé Rotary-Die.

16. Procédé de fabrication d'un objet façonné, en particulier d'une capsule comportant une enveloppe de capsule en une pièce, présentant les étapes suivantes consistant à :
a) se procurer une composition contenant au moins un polymère filmogène choisi dans le groupe constitué par des dérivés de poly(alcool vinylique) avec plus de 0,5 % en moles de groupes fonctionnels différents de groupes hydroxyle de la structure poly(alcool vinylique) et une proportion de poly(alcool vinylique) supérieure ou égale à 50 % en poids par rapport au poids total du polymère, et comportant au moins un groupe acétal par molécule, et ainsi qu'en outre au moins un polyglycérol ayant un degré de polymérisation supérieur ou égal à quatre, la composition contenant au moins un additif en une quantité comprise dans la plage de 0,1 à 70 % en poids par rapport au poids total de la composition, l'additif étant choisi dans le groupe constitué par l'eau, le glycérol, un propylèneglycol, des urées, la N-méthyl-2-pyrrolidone, le diméthylsulfoxyde, le diméthylformamide, des polyoxycétones, le sorbitol, des sorbitans, des oligomères, des produits de dégradation de l'amidon hydrogénés, un polyéthylèneglycol, des esters d'acides gras de polyéthylèneglycol, des esters d'acides gras du glycérol, les esters d'acides gras de polyglycérol, des esters d'acides gras de sorbitan éthoxylés, des poly(alcool vinylique) et leurs dérivés ;
b) chauffer la composition à la température d'écoulement, de préférence comprise dans la plage de 40 à 130 °C ;
c) façonner, en particulier extruder, sous forme d'un film, la composition portée à la température d'écoulement ;
d) éventuellement, stocker le film de façon temporaire ;
e) transformer le film pour obtenir un objet façonné, en particulier une capsule comportant une enveloppe de capsule en une pièce, à l'aide d'un procédé de façonnage intermittent ou continu, en particulier un procédé continu de façonnage et de remplissage.

17. Procédé selon la revendication 16, **caractérisé en ce que** le procédé de façonnage continu est le procédé Rotary- Die.

18. Procédé de fabrication d'un objet façonné, en particulier d'une enveloppe de capsule, en deux parties, comportant les étapes suivantes consistant à :
a) se procurer une composition contenant au moins un polymère filmogène choisi dans le groupe constitué par des dérivés de poly(alcool vinylique) avec plus de 0,5 % en moles de groupes fonctionnels différents des groupes hydroxyle de la structure poly(alcool vinylique) et avec une proportion de poly(alcool vinylique) supérieure ou égale à 50 % en poids par rapport au poids total du polymère, et comportant au moins un groupe acétal par molécule, ainsi qu'en outre au moins un polyglycérol ayant un degré de polymérisation supérieur ou égal à quatre, la composition contenant au moins un additif en une quantité comprise dans la plage de 0,1 à 70 % en poids par rapport au poids total de la composition, l'additif étant choisi dans le groupe constitué par l'eau, le glycérol, le propylèneglycol, des urées, la N-méthyl-2-pyrrolidone, le diméthylsulfoxyde, le diméthylformamide, des polyoxycétones, le sorbitol, des sorbitans, des oligomères, des produits de dégradation de l'amidon hydrogénés, un polyéthylèneglycol, des esters d'acides gras de polyéthylèneglycol, des esters d'acides gras du glycérol, des esters d'acides gras de polyglycérol, des esters d'acides gras de sorbitan éthoxylés, des poly(alcool vinylique) et leurs dérivés ;
b) chauffer la composition à la température d'écoulement, de préférence dans la plage de 40 à 150 °C :
c) mouler par injection, pour obtenir des objets moulés par injection préfabriqués, la composition portée à la température d'écoulement ;
d) démoulage des objets moulés par injection en c), à partir du moule de moulage par injection, pendant ou après le refroidissement.

19. Procédé de fabrication d'une couche de protection, **caractérisé par** les étapes suivantes consistant à :
a) se procurer une composition contenant au moins un polymère filmogène choisi dans le groupe constitué par des dérivés de poly(alcool vinylique) avec plus de 0,5 % en moles de groupes fonctionnels différents des groupes hydroxyle de la structure de poly(alcool vinylique) et avec une proportion de poly(alcool vinylique) supérieure ou égale à 50 % en poids par rapport au poids total du polymère, et comportant au moins un groupe acétal par molécule, ainsi qu'en outre au moins un polyglycérol ayant un degré de polymérisation supérieur ou égal à quatre, la composition contenant au moins un additif en une quantité comprise dans la plage de 0,1 à 70 % en poids par rapport au poids total de la composition, l'additif étant choisi dans le groupe constitué par l'eau, le glycérol, le propylèneglycol, des urées, la N-méthyl-2-pyrrolidone, le diméthylsulfoxyde, le diméthylformamide, des polyoxycétones, le sorbitol, des sorbitans, des oligomères, des produits de dégradation de l'amidon hydrogénés, un polyéthylèneglycol, des esters d'acides gras de polyéthylèneglycol, des esters d'acides gras du glycérol, des esters d'acides gras de polyglycérol, des esters d'acides gras de sorbitan éthoxylés, des poly(alcool vinylique) et leurs dérivés ;
b) dissoudre la composition dans un solvant ou dans un mélange solvant, approprié ;
c) immerger ou pulvériser la solution dans/sur un objet de forme quelconque ;
d) sécher la solution par élimination du solvant.
